# FASCICULE DE BREVET EUROPEEN

(11) **EP 1 919 689 B1**
(45) Date de publication et mention de la délivrance du brevet: **06.05.2009**
(21) Numéro de dépôt: 06794333.2
(22) Date de dépôt: 16.08.2006
(51) Int. Cl.: B29C 49/12

(54) **POSTE DE SOUFFLAGE POUR INSTALLATION D 'ETIRAGE -SOUFFLAGE DE RECIPIENTS ET INSTALLATION COMPORTANT UN TEL ENSEMBLE**
BLASFORMSTATION FÜR EINE BEHÄLTERSTRECK-/BLASANLAGE UND ANLAGE MIT EINER DERARTIGEN ANORDNUNG
BLOW-MOULDING STATION FOR A CONTAINER STRETCHING/BLOWING PLANT AND PLANT COMPRISING ONE SUCH ASSEMBLY

(30) Priorité: 12.08.2005 FR 0508547
(43) Date de publication de la demande: 14.05.2008
(73) Titulaire: Sidel Participations, 76930 Octeville Sur Mer (FR)
(72) Inventeur: TOUTOUX, Alexandre, F-76930 Octeville Sur Mer (FR); GILLET, Denis, F-76930 Octeville Sur Mer (FR)
(74) Mandataire: Cabinet Plasseraud
(86) Numéro de dépôt international: PCT/FR2006/001952
(87) Numéro de publication internationale: WO 2007/020355

(56) Documents cités:
- DE-A1- 3 815 193
- FR-A- 2 863 929
- FR-A1- 2 814 392
- FR-A1- 2 863 928
- GB-A- 1 493 806
- US-A- 3 977 822
- US-A- 4 141 680
- US-B1- 6 729 868

## Description

La présente invention concerne d'une manière générale le domaine de la fabrication des récipients en matériau thermoplastique, tel que par exemple le PET ou le PEN, par un processus d'étirage-soufflage à partir d'une ébauche.

L'invention concerne notamment les machines d'étirage-soufflage de type rotatif, c'est-à-dire comportant plusieurs postes de soufflage montés à la périphérie d'un carrousel qui est entraîné de manière continue en rotation autour de son axe. Chaque poste de soufflage comporte notamment un moule de soufflage, un dispositif de soufflage et un dispositif d'étirage.

### Définition de certains termes employés

Les définitions qui suivent ne sont données qu'à fins de clarté.

Ces définitions font référence au vocabulaire pratiqué habituellement dans les métiers impliqués par la présente invention.

Par PET, on désigne le poly(-éthylène téréphtalate), c'est-à-dire un polyester obtenu par exemple par polycondensation, à partir d'acide téréphtalique et d'éthylène glycol.

Par PEN, on désigne le poly(-éthylène naphtalate). C'est également un polyester.

Par ébauche, on désigne une préforme ou un récipient intermédiaire.

Une préforme est généralement un objet sensiblement tubulaire fermé à une extrémité axiale et dont l'ouverture présente la forme définitive du col du corps creux final, tel qu'une bouteille ou un flacon.

Par soufflage, on désigne un procédé dans lequel l'ébauche est placée dans un moule de finition contenant l'empreinte du récipient à obtenir, une tuyère de soufflage (ou nez de soufflage) étant mise en communication avec l'ouverture (le col) de cette ébauche, un fluide de soufflage sous haute pression plaquant la matière de l'ébauche contre les parois du moule. Le moule de finition est par exemple à portefeuille. Le fluide de soufflage est en général de l'air.

Par étirage soufflage est désigné un procédé dans lequel une tige d'élongation (appelée également canne) vient étirer la préforme dans le moule de soufflage, par appui contre la paroi de fond de la préforme. Un tel procédé est mis en oeuvre dans les machines dites à simple soufflage. Un tel procédé est notamment mis en oeuvre pour le soufflage de préformes préalablement injectées, l'étirage (ou élongation) étant réalisé avant ou pendant le soufflage de la préforme. Lorsque l'étirage précède le soufflage, un présoufflage est réalisé pour éviter notamment que la matière ne se resserre sur la tige d'élongation. Avant l'étirage-soufflage, les préformes en matériau thermoplastique sont chauffées dans un four de conditionnement pour être portées à une température supérieure à la température de transition vitreuse du matériau thermoplastique.

Par « étirage-soufflage » est désigné ici également un procédé dans lequel une tige d'élongation vient étirer un récipient intermédiaire. Un tel procédé est mis en oeuvre dans les machines dites à double soufflage.

### Etat général de la technique

Ainsi qu'il est illustré par exemple dans le document FR 2 764 544 de la Demanderesse, la tige d'élongation est conventionnellement introduite dans l'ouverture (le col) de l'ébauche à étirer et à souffler. Cette tige d'élongation coulisse au travers d'un organe appelé tuyère. Cette tige coulisse axialement dans l'axe longitudinal de la tuyère, un espace annulaire étant laissé libre autour de cette tige pour permettre le passage du fluide de soufflage.

### Commande du mouvement de la tige d'étirage et problèmes techniques associés à cette commande

L'étirage d'une ébauche en PET et le présoufflage à moyenne pression (par exemple 7 bars) conduisent à une vitesse d'élongation axiale de l'ordre de 0.8 à 1.2 m/s. L'étirage radial obtenu par soufflage à haute pression (par exemple 40 bars) permet de plaquer le matériau contre les parois du moule qui est refroidi, par exemple par circulation interne d'eau réfrigérée.

Le contrôle de la vitesse d'élongation axiale est d'une grande importance pour la qualité du produit soufflé. Il convient également d'assurer la synchronisation du mouvement de la tige d'étirage avec le déclenchement du soufflage. Il est donc nécessaire de contrôler la cinématique des tiges d'élongation. Ce contrôle est délicat, en particulier pour les machines d'étirage soufflage actuelles dont les cadences sont très élevées.

La vitesse d'étirage est conventionnellement régulée grâce à un dispositif à galet et à came placé en partie supérieure de machine. Ce dispositif est si conventionnel qu'il n'est souvent même pas représenté (voir par exemple le document FR 2 863 929 de la Demanderesse).

Ce dispositif à galet et à came vise à synchroniser la position axiale de la tige d'étirage en fonction de la position angulaire du poste de soufflage considéré autour de l'axe de rotation du carrousel.

La figure 1 annexée, issue du document FR 2 814 392 de la Demanderesse, illustre une configuration conventionnelle de cette commande à galet et à came.

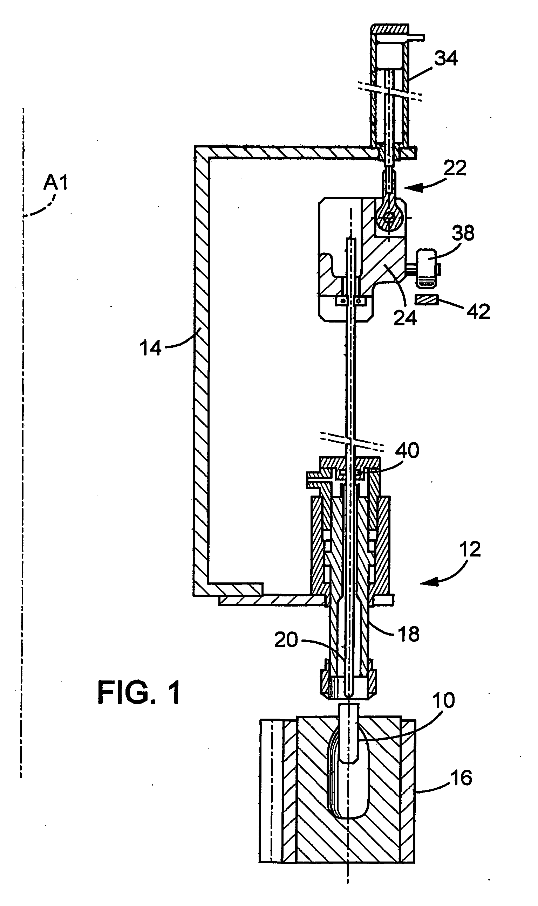

La machine de l'art antérieur illustrée en figure 1 est rotative : elle comporte plusieurs postes 12 d'étirage-soufflage montés sur un carrousel 14. Le carrousel 14 est entraîné en rotation de manière continue autour de son axe A1. Chaque poste d'étirage-soufflage 12 comporte un moule de soufflage 16, une tuyère de soufflage 18, une tige d'étirage 20 et des moyens de commande 22 des déplacements de la tige d'étirage 20. Les tiges 20 sont fixées à leur extrémité supérieure sur un coulisseau 24 qui peut coulisser verticalement sur un rail (non représenté) monté sur le carrousel 14. Le poste de soufflage comporte un vérin pneumatique 34 commandé en tout ou rien, ce vérin agissant sur le coulisseau 24 pour le faire coulisser axialement vers le bas. La vitesse d'étirage est contrôlée par une came de régulation qui s'étend selon une hélice autour de l'axe A1 du carrousel 14. Le coulisseau 24 comporte un galet 38 qui, sous l'action du vérin 34, vient se plaquer sur ladite came. Lors de la remontée de la tige 20, la chambre de commande du vérin 34 est mise à l'air libre. A ce moment là, du fait de la présence du joint d'étanchéité 40, seule la partie inférieure de la tige 20 est exposée à la pression de soufflage. La tige 20 est donc alors soumise à un effort axial dirigé vers le haut qui est égal à la pression de soufflage multipliée par la surface transversale de la tige en section. Suivant les cas, cet effort peut être de l'ordre de 50 à 150 daN, ce qui est suffisant pour compenser le poids de la tige 20 et de son mécanisme de commande, et pour ainsi provoquer le retour de la tige vers 20 sa position escamotée. Il est préférable de prévoir une came de sécurité 42 qui est analogue à la came de régulation mais qui est configurée pour forcer le retour de la tige 20 vers sa position escamotée si le galet 38 vient à son contact. La came de sécurité 42 permet d'être sûr que la tige 20 est dégagée du moule 16 lorsqu'on veut éjecter le récipient en fin de moulage même si, par exemple à la suite de l'éclatement de la préforme 10 au cours du soufflage, l'air sous pression s'échappe du moule.

Le document FR 2 863 928 également au nom de la Demanderesse, illustre une autre configuration de la commande du mouvement de la tige d'étirage, par un mécanisme à galet et came de régulation. Deux cames de régulation, fixes, circulaires et superposées, définissent chacune sur leur face interne une surface de roulement pour deux galets de culbuteur. Ces surfaces de roulement sont pourvues de bosses. Le roulement des galets sur ces bosses provoque la rotation du culbuteur. Un mécanisme à compas transforme le mouvement de rotation du culbuteur en une mouvement de va et vient linéaire vertical de la tige d'étirage.

Les moyens de commande du mouvement de la tige d'étirage décrits dans les documents FR 2 814 392 ou FR 2 863 928 donnent entière satisfaction en termes de fonctionnement du procédé d'étirage-soufflage.

Toutefois il est apparu le besoin de diminuer de manière importante la hauteur des machines d'étirage soufflage. Les dispositions décrites dans les documents FR 2 814 392 et FR 2 863 928 pour la came de régulation et les vérins de commande conduisent à une hauteur importante pour la machine.

Par ailleurs, la présence de cames de régulation, en regard des buvants de bouteilles sortant des moules peut conduire à des pollutions accidentelles, ces cames étant nécessairement graissées.

Un des buts de l'invention est de résoudre ces problèmes.

### Présentation générale de l'invention

A ces fins l'invention se rapporte, selon un premier aspect à un poste d'étirage soufflage de préformes avec leur extrémité ouverte vers le haut comprenant une console supportant un moule de soufflage, le poste comprenant en outre une tige d'élongation et des moyens de commande des mouvements de la tige d'élongation, ces moyens de commande comprenant d'une part un actionneur, et d'autre part un galet et une came de régulation de vitesse, ledit galet venant en appui contre ladite came de régulation de vitesse lors de l'entrée de la tige d'élongation dans le moule de soufflage, contrôlant ainsi la vitesse d'entrée de cette tige d'élongation dans le moule de soufflage, la came de régulation de vitesse étant disposée en dessous du fond du moule de soufflage.

Le moule est par exemple à portefeuille.

Le poste de soufflage comprend une tuyère de soufflage.

Selon diverses réalisations, le poste d'étirage soufflage selon l'invention présente les caractères suivants, le cas échéant combinés :
- l'actionneur est un vérin pneumatique ou hydraulique;
- le poste comprend des moyens de montage amovible de la tige d'élongation aux moyens de commande des mouvements de cette tige d'élongation.

Afin de permettre une modification rapide de la tige d'élongation et standardisée, les moyens de montage amovible comprennent un boîtier amovible dans lequel est fixée une extrémité de la tige d'élongation, l'autre extrémité de la tige d'élongation étant destinée à s'insérer dans une ébauche présente dans le moule.

Avantageusement, le galet est monté en partie extrême inférieure d'un barreau coulissant sensiblement verticalement, ce barreau étant solidaire, à sa partie extrême supérieure opposée, d'une barre sensiblement transversale reliant mécaniquement la tige d'élongation à la tige du vérin.

Selon un mode de réalisation avantageux, le boîtier est fixé sur la barre transversale.

Afin de coordonner le mouvement de descente de la tige d'élongation avec le mouvement de la tige du vérin, l'extrémité supérieure de la tige du vérin est fixée à la barre transversale.

Afin de réduire la hauteur totale du poste d'étirage-soufflage, le galet est en appui contre le rebord supérieur de la came lors de la descente de la tige d'élongation dans l'ébauche présente dans le moule.

Afin de réduire le volume global du poste d'étirage-soufflage, le barreau élancé, la tige d'élongation et la tige du vérin sont parallèles entre eux.

Afin de coordonner le mouvement de descente de la tige d'élongation dans l'ébauche présente dans le moule avec le roulement du galet sur la came de contrôle de cette descente, l'actionneur est commandé de manière telle que le barreau élancé exerce une force de poussée verticale descendante sur la came lors du roulement du galet sur la came.

Afin que la tige retourne dans sa position initiale avant l'opération d'étirage-soufflage, l'actionneur est apte à relever la tige d'élongation une fois que la tige a totalement étiré l'ébauche présente dans le moule et/ou que le galet n'est plus en appui sur la came de contrôle de vitesse de descente de la tige.

L'invention se rapporte, selon un deuxième aspect, à une machine d'étirage-soufflage du type carrousel comprenant :
- un châssis tournant rotatif autour d'un axe de rotation ;
- plusieurs postes d'étirage-soufflage, supportés par le châssis tournant ;
- une colonne tournante d'alimentation fluidique, co-axiale à l'axe de rotation du châssis tournant ;
- au moins un raccord fluidique tournant, prévu sur ladite colonne et connecté à des sources fixes de fluides,
   cette machine comprenant au moins un poste d'étirage-soufflage tel que présenté ci-dessus.

### Liste des figures annexées

L'invention sera mieux comprise à la lecture de la description détaillée qui suit de certains modes de réalisation préférés donnés à titre purement illustratif et nullement limitatif.

Dans cette description, on se réfère aux dessins annexés sur lesquels :
- la figure 1 est une vue issue du document FR 2 814 392 de la Demanderesse ;
- la figure 2 est une vue en perspective d'un poste d'étirage-soufflage selon un mode de réalisation de l'invention, certaines pièces constitutives du poste étant représentées dans une position coulissée étendue non fixée au reste du poste d'étirage-soufflage par mesure de clarté et de lisibilité de la figure;
- les figures 3 et 4 sont des vues du poste d'étirage-soufflage représenté en figure 2, selon d'autres angles.
- la figure 5 est une vue en perspective d'un poste d'étirage-soufflage, selon le mode de réalisation préférentiel de l'invention, avec les différentes pièces constitutives du poste liées les unes aux autres, le poste étant dans une position de repos ;
- la figure 6 est une vue en perspective d'un poste d'étirage-soufflage selon l'invention, le poste étant dans une position intermédiaire entre la position de repos illustrée à la figure 5 et la position finale où la tige d'élongation est totalement étendue dans le moule, et
- la figure 7 est une vue en perspective d'un poste d'étirage-soufflage selon l'invention, le poste étant dans la position finale où la tige d'élongation est totalement étendue dans le moule.

### Description détaillée de modes de réalisation

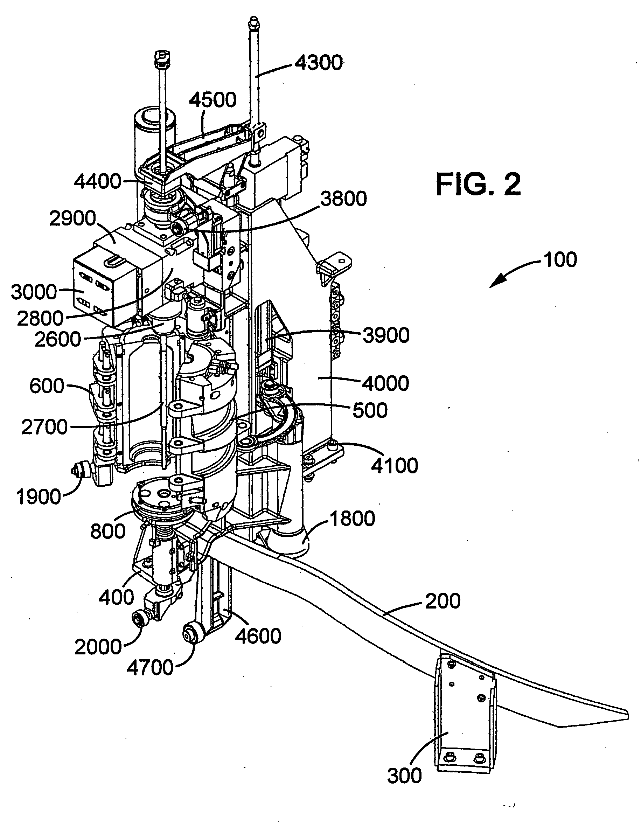

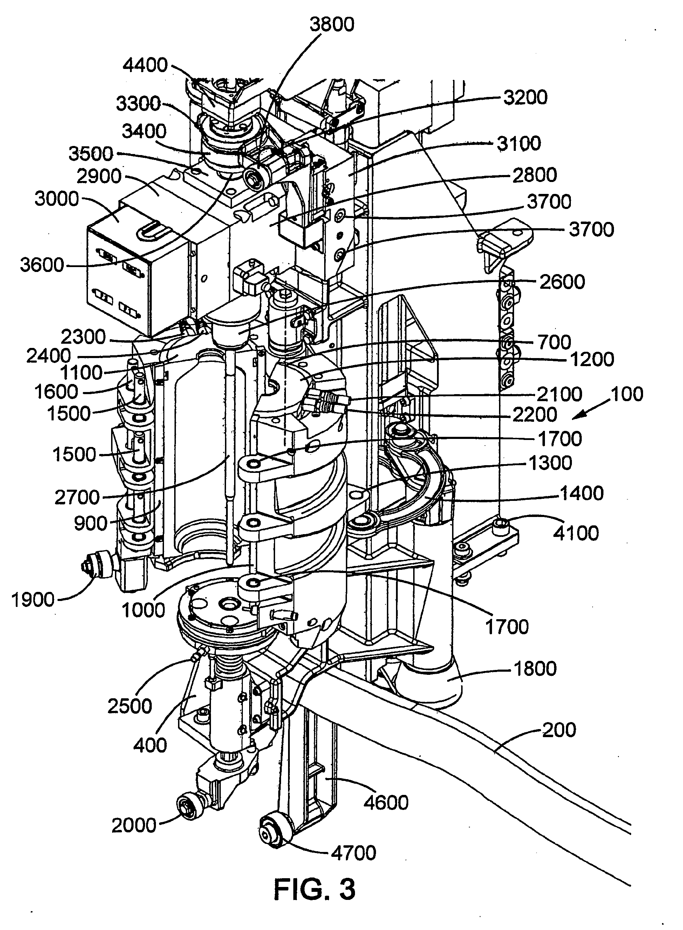

L'on se rapporte tout d'abord aux figures 2 et 3.

Ces figures 2 et 3 représentent un poste 100 d'étirage-soufflage de machine rotative d'étirage-soufflage.

Par machine rotative d'étirage-soufflage, on désigne ici des machines du type carrousel comprenant :
- un châssis tournant rotatif autour d'un axe de rotation ;
- plusieurs postes d'étirage-soufflage, supportés par le châssis tournant ;
- une colonne tournante d'alimentation fluidique, co-axiale à l'axe de rotation du châssis tournant ;
- au moins un raccord fluidique tournant, prévu sur ladite colonne et connecté à des sources fixes de fluides.

Les machines tournantes d'étirage-soufflage peuvent comporter plusieurs dizaines de postes d'étirage-soufflage répartis autour d'une colonne centrale d'alimentation fluidique.

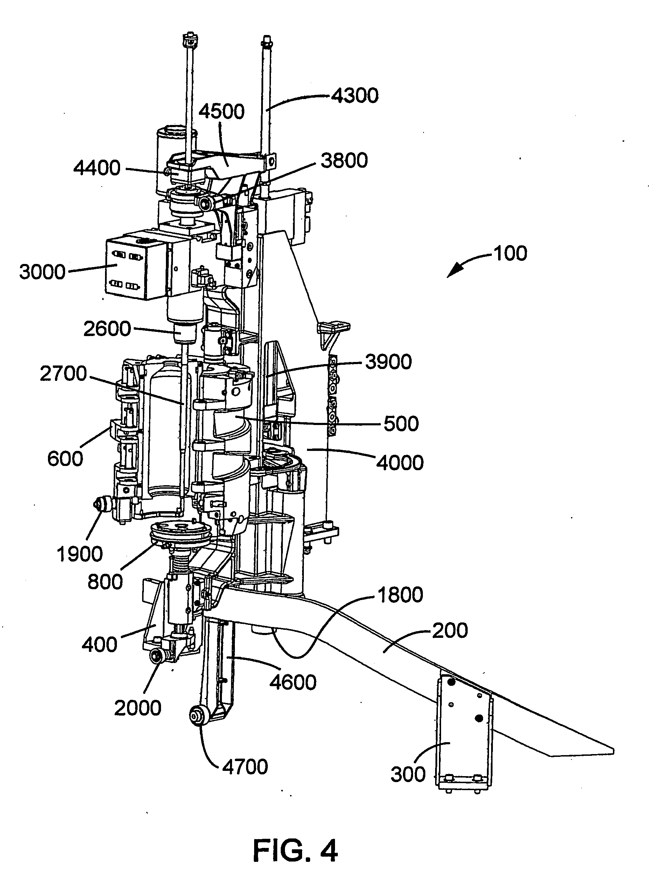

La présente invention porte également sur une telle machine d'étirage-soufflage de type carrousel comprenant un poste d'étirage-soufflage selon l'invention et tel qu'illustré dans les figures 2 à 7.

Les préformes sont soufflées avec leur extrémité ouverte tournée vers le haut de la figure 2, de sorte que la tuyère de soufflage et la tige d'étirage sont agencées au-dessus du buvant du moule. De cette disposition découle le choix des notions de verticalité, haut, bas, supérieur et inférieur qui seront utilisées dans la suite du texte.

La machine tournante est pourvue de cames 200 pour le contrôle du mouvement de la tige 2700 d'élongation. Une de ces cames 200 est représentée en figure 2, cette came 200 étant fixée, à ses deux parties extrêmes, sur le châssis fixe de la machine tournante, ce châssis n'étant pas représenté, à fins de simplification du dessin.

La fixation de la came 200 sur le châssis fixe est assurée par un support 300 inférieur et un support 400 supérieur haut, ces supports 300, 400 étant vissés sur la came 200 et sur le châssis fixe de machine . A cette fin, chaque support 300, 400 est en forme de profilé de section en I dont une aile vient en appui contre la came 200 et une paroi transversale inférieure vient en appui contre le châssis fixe de la machine.

Chaque poste 100 supporte un moule de type portefeuille. Par moule de type portefeuille on désigne par exemple les dispositifs de moulage décrits dans les brevets FR 2 646 802, FR 2 653 058, FR 2 737 436 et FR 2 843 714, tous au nom de la Demanderesse.

Dans la réalisation représentée, le moule comprend deux porte-coquilles 500, 600 articulés autour d'un axe 700, et un fond 800, ce fond 800 étant mobile suivant un axe sensiblement parallèle à l'axe 700.

Les deux porte-coquilles 500, 600 sont pourvus de faces coopérantes ou faces d'appui définies par des barrettes de butée 900, 1000. Ces barrettes de butée 900, 1000 définissent un plan de joint pour le moule.

Une pièce de moulage intérieure ou coquille 1100, 1200 est fixée sur chaque porte-coquille 500, 600. Cette fixation est avantageusement démontable, de sorte que les porte-coquilles 500, 600 formant l'armature externe du moule peuvent être assemblés à différentes coquilles 1100, 1200 usinées en fonction de la forme du récipient à réaliser.

Lors de l'étirage-soufflage, la matière constituant l'ébauche vient en effet se plaquer contre la paroi interne des coquilles 1100, 1200.

Sur chaque porte-coquille 500, 600 une oreille 1300 externe saillante supporte à rotation une extrémité de biellette d'actionnement 1400. Les deux autres extrémités des deux biellettes d'actionnement 1400 sont réunies à libre rotation sur un arbre qui peut être déplacé linéairement vers l'axe 700 d'ouverture/fermeture du moule.

Le moule est pourvu de moyens de verrouillage. Ces moyens de verrouillage comprennent, sur un porte-coquille, des doigts 1500 et un arbre de verrouillage 1600. Ces moyens de verrouillage comprennent des bagues 1700, sur l'autre porte-coquille 500.

Ces moyens de verrouillage permettent d'empêcher l'écartement ou l'entrebâillement du moule lors de l'introduction du fluide de soufflage sous pression très élevée.

Sur la machine tournante, l'ouverture/fermeture des moules est assurée par la rotation de galets 1800 suiveurs coopérant avec un premier ensemble de cames, non représenté.

De même, sur la machine tournante, le verrouillage/déverrouillage des moules est assuré par la rotation de galets 1900 suiveurs coopérant avec un deuxième ensemble de cames, non représenté.

Dans la réalisation représentée en figure 2, le fond 800 de moule est mobile axialement, sensiblement parallèlement à l'axe 700 d'ouverture/fermeture du moule. Ce mouvement axial des fonds 800 de moule est obtenu par la rotation de galets suiveurs 2000 coopérant avec un troisième ensemble de came, non représenté.

Il est à noter que les cames d'élongation 200 sont placées sensiblement à la même hauteur que bien d'autres cames : celles des galets 1800 d'ouverture/ fermeture de moule, celles des galets 1900 de verrouillage/- déverrouillage des moules, celles des galets 2000 de mouvement axial des fonds de moule.

Dans la masse constituant les coquilles 500, 600 sont prévus des circuits de refroidissement constitués par des conduits et/ou par des cavités dans lesquels circule un fluide de refroidissement, par exemple de l'eau. Des abouts 2100-2500 de raccordement de fluide pour chaque coquille 1100, 1200 et pour le fond 800 de moule sont visibles sur la figure 2. Ces abouts 2100-2500 sont connectée à la colonne centrale tournante d'alimentation fluidique, par des flexibles (non représentés sur les figures uniquement par mesure de clarté).

Une buse ou tuyère de soufflage 2600 et une tige 2700 d'élongation sont montées, de manière connue en soi, axialement sur le poste 100 d'étirage-soufflage et traversent un corps 2800 pourvu de conduits internes de passage de fluide de présoufflage, soufflage et dégazage.

Ce corps 2800 est de section rectangulaire et d'enveloppe sensiblement cubique.

En partie avant de ce corps 2800, un bloc 2900 contient quatre logements pour des électrovannes. Ce bloc 2900 est monté amovible sur le corps 2800, par exemple par vissage.

En avant de ce bloc 2900, un boîtier 3000 loge les pilotes de commandes des électrovannes.

Un flasque ou bloc 3100, pourvu de conduits internes de passage d'air est placé en face arrière du corps 2800. Ce flasque ou bloc 3100 est monté de manière amovible sur le corps 2800, par exemple par vissage. Un silencieux, de type connu en soi et non représenté sur les figures, est monté sur le flasque ou bloc 3100.

Les têtes de vis de montage du boîtier 3000 sur le bloc 2900, tout comme les têtes de vis de montage du bloc 2900 sur le corps 2800, sont toutes tournées vers l'avant du poste 100. Cette disposition facilite les opérations de montage/ démontage pour la maintenance.

La buse ou tuyère de soufflage 2600 forme la partie inférieure d'un ensemble se comportant comme un piston, ce piston appartenant à un vérin dont le cylindre serait le corps 2800.

Des moyens de commande provoquent le mouvement de descente de la buse ou tuyère de soufflage 2600, jusqu'au contact étanche de cette buse ou tuyère 2600 avec la partie supérieure du moule. Ces moyens de commande comprennent une fourchette 3200 venant en prise avec une gorge 3300 annulaire externe d'une pièce 3400 tubulaire solidaire de la partie supérieure de la buse ou tuyère de soufflage 2600.

Un couvercle transversal 3500 est monté sur le corps 2800. En position fin de course, un joint 3600 annulaire amortisseur est plaqué contre ce couvercle 3500.

Les connexions des énergies fluidiques, non représentées sur les figures, sont prévues sur la face arrière du bloc 3100.

Le bloc 3100 foré interface reçoit en 3700 les connexions des énergies fluidiques, avantageusement par connexion rapide.

Pour le démontage lors des opérations de maintenance, il est inutile de déconnecter les fluides, le bloc 3100 d'interface reste sur la machine.

Lors du remontage, des pions de centrage (non représentés) garantissent le bon positionnement du corps 2800 sur le bloc 3100 d'interface : aucun réglage n'est à reprendre.

La fourchette 3200 fait partie d'un équipage guidé solidaire du flasque 3100 arrière. Cet équipage guidé est actionné par une came (non représentée sur les figures, mais de type connu en soi) sur un galet 3800. Le mouvement est transmis de l'équipage mobile à la buse 2600 par la fourchette 3200.

La buse ou tuyère 2600 se trouve en position basse au repos. La contre force exercée pour le maintien du galet 3800 de commande sur la came peut être établie de deux façons distinctes :
- un ressort mécanique ;
- un ressort-pneumatique intégré sous la forme d'un piston solidaire et concentrique à la buse, translatant dans une chambre dont la partie supérieure est sous pression. Le réglage de la pression permet d'ajuster la valeur de la force. La chambre inférieure peut ainsi être utilisée pour une commande de remontée de la tuyère.

Dans une autre réalisation, la commande du mouvement de translation de la buse est assurée pneumatiquement. La buse est solidaire d'un piston concentrique, translatant dans une chambre dont les parties supérieure et inférieure sont reliées à un distributeur pneumatique.

On décrit maintenant le positionnement de la buse ou tuyère 2600.

La position basse de la buse ou tuyère 2600 est réalisée par le contact amorti du joint 3600 sur le couvercle 3500.

Cette configuration offre au moins deux avantages :
- les réglages de position basse de la buse ou tuyère 2600 n'affectent pas la position de l'ensemble gorge 3300/ fourchette 3200/équipage guidé/galet 3800. La position relative de la came par rapport au galet 3800 n'a pas à être modifiée en cas de modification de la position basse de la buse ou tuyère 2600 ;
- l'embout rapporté sur la buse ou tuyère 2600, et comportant le joint d'étanchéité pour le soufflage des corps creux, n'a pas à être réglable sur la buse ou tyère 2600. L'opération de remplacement de ce joint est plus simple et rapide.

On décrit maintenant plus particulièrement le montage de la tige d'élongation et la commande de son mouvement.

Un actionneur, avantageusement un vérin 3900, préférentiellement pneumatique ou hydraulique, est fixé sur la console 4000 du poste 100, cette console 4000 étant elle-même fixée, par exemple par des vis 4100, sur le châssis tournant de la machine. La console 4000 porte en face arrière les distributeurs hydraulique ou pneumatique, et par exemple le distributeur d'alimentation du vérin 3900.

La tige 4300 du vérin 3900 s'étend sensiblement parallèlement à l'axe 700 d'ouverture fermeture du moule et à la tige 2700 d'élongation.

Un boîtier 4400 assure la fixation de la tige 2700 d'élongation sur un coulisseau ou une barre 4500 transversale du barreau 4600 élancé, cette barre 4500 transversale étant elle-même montée sur la tige 4300 du vérin 3900.

Le poste d'étirage-soufflage 100 comprend donc des moyens de montage amovible de la tige 2700 d'élongation aux moyens de commande des mouvements de cette tige 2700, lesdits moyens de montage amovible comprenant le boîtier 4400 amovible dans lequel est fixée une extrémité de la tige 2700 d'élongation, l'autre extrémité de la tige 2700 d'élongation étant destinée à s'insérer dans l'ébauche présente dans le moule lors de l'opération de soufflage.

La tige 2700 d'élongation est donc fixée de manière amovible et réglable par l'intermédiaire du boîtier 4400 sur la barre 4500 transversale sur laquelle est également fixée l'extrémité supérieure de la tige 4300 du vérin 3900. Ainsi, par voie de conséquence, la tige 2700 d'élongation est fixée de manière amovible et réglable sur la tige 4300 du vérin 3900 par l'intermédiaire de la barre 4500 transversale.

Avantageusement, le barreau 4600 élancé, la tige 2700 d'élongation et la tige 4300 du vérin 3900 sont parallèles entre eux.

Bien que, sur les figures 2 à 4, la tige 2700 d'élongation et la tige 4300 du vérin 3900 soient représentées traversantes et en saillie de la barre 4500 transversale, il doit être compris que cette représentation a été faite uniquement par mesure de clarté et de lisibilité et qu'il doit être compris que, selon le mode de réalisation référentiel, les extrémités supérieures des tige 2700 d'élongation et tige 4300 du vérin 3900 sont fixées sur la barre 4500 transversale et ne sont préférentiellement pas en saillie ou prévues traversantes lors du fonctionnement du poste 100 d'étirage-soufflage selon l'invention.

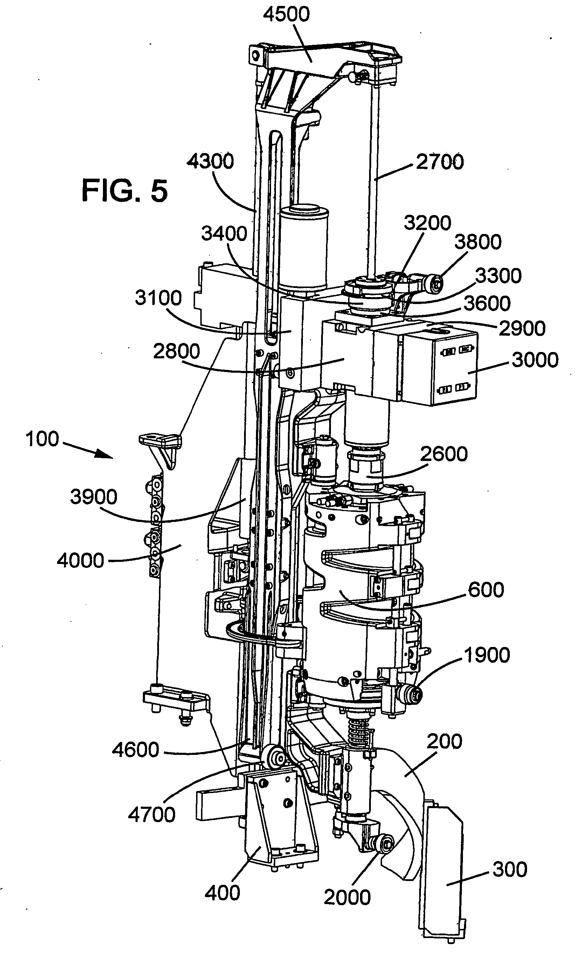

Il est représenté de manière plus précise sur les figures 5 à 7 trois étapes successives d'étirage de la tige 2700 d'élongation dans le moule avec les différentes pièces constitutives du poste 100 selon l'invention dans leur position exacte au moment de cette opération d'étirage-soufflage.

L'emploi d'un tel boîtier 4400 présente de nombreux avantages. Le changement de fabrication de récipient peut nécessiter l'emploi d'une préforme de longueur et/ou de diamètre intérieur différent de ceux de la fabrication antérieure. Il peut aussi arriver qu'il faille utiliser une tige 2700 d'élongation dont l'extrémité appuyant sur le fond de préforme présente une forme différente de celle utilisée lors de la campagne de fabrication précédente. Les machines rotatives comportent souvent plusieurs dizaines de moules. L'emploi d'un boîtier 4400 permet un changement rapide des tiges 2700 d'élongation, car il suffit dans ces cas-là de remplacer uniquement le boîtier 4400 pour modifier les caractéristiques de la tige 2700 d'étirage, par exemple sa longueur.

Le coulisseau ou barre 4500 transversale est solidaire du barreau 4600 élancé, lui-même coulissant verticalement par rapport à la console 4000, la partie extrême basse inférieure de ce barreau 4600 portant un galet 4700. Ce galet 4700 vient en appui contre la came 200 lorsque la tige d'élongation effectue son mouvement de descente dans l'ébauche à souffler telle qu'une préforme. En effet, la came 200 définit une piste de roulement pour les galets 4700 des postes 100, la forme de cette piste étant déterminée notamment en fonction des vitesses nominale de descente de la tige 2700 d'élongation, par exemple 1700 mm par seconde.

Autrement dit, le galet 4700 est monté en partie extrême inférieure du barreau 4600 élancé coulissant sensiblement verticalement, ce barreau 4600 étant solidaire, à sa partie extrême supérieure opposée, de la barre 4500 sensiblement transversale reliant mécaniquement la tige 2700 d'élongation à la tige 4300 du vérin 3900.

L'actionneur de type vérin 3900 travaille constamment en traction, la tige 4300 du vérin 3900 étant orientée vers le haut du poste 100.

Autrement dit, l'actionneur de type vérin 3900 est commandé de manière telle que le barreau 4600 élancé exerce une force de poussée verticale descendante sur la came 200 lors du roulement du galet 4700 sur la came 200.

Dans la position représentée sur la figure 2, la tige 2700 d'élongation est dans sa position extrême inférieure, correspondant à son appui contre la paroi de fond d'un récipient, en fin de soufflage.

Toutefois, il convient de rappeler que, par mesure de lisibilité et de clarté, il a été représenté, sur les figures 2 à 4, le poste de soufflage selon l'invention avec le moule en position ouverte, la tige 2700 d'élongation en position totalement étendue et avec le galet 4700 sur la barreau 4600 élancé en position basse. Il doit être néanmoins compris que lorsque la tige 2700 est complètement étendue dans le moule, et selon le mode de réalisation préférentiel de l'invention, alors le moule est fermé (on ne peut donc pas voir l'intérieur de ce moule) et le galet 4700 sur la barreau 4600 élancé est en appui contre le rebord supérieur de la came 200 de contrôle de régulation de vitesse de descente de la tige 2700 d'élongation.

Une came (non représentée sur les figures mais de type connu en soi) montée en partie extrême haute de la tige 2700 d'élongation forme butée fin de course haute pour le coulisseau 4500.

Il est représenté sur là figure 5 une vue en perspective d'un poste 100 d'étirage-soufflage selon le mode de réalisation préférentiel de l'invention dans une position de repos, c'est-à-dire dans une position juste ayant le soufflage et l'étirage de la préforme et où la tige 2700 d'élongation est dans sa position la plus haute. A ce moment, le galet 4700 du barreau 4600 élancé vient en appui contre le rebord supérieur de la came 200.

Le mouvement de descente de la tige 2700 d'élongation est commandé par le mouvement de descente et de roulement du galet 4700 sur la came 200.

En effet, le galet 4700 vient en appui contre le rebord ou profil supérieur de la came 200 de régulation de vitesse lors de l'entrée de la tige 2700 d'élongation dans le moule de soufflage, contrôlant ainsi la vitesse d'entrée de cette tige 2700 d'élongation dans l'ébauche présente dans le moule de soufflage.

Le vérin 3900 travaille alors constamment en poussée de manière à pouvoir plaquer et mettre en appui le galet 4700 du barreau 4600 élancé en appui sur le rebord supérieur de la came 200. Ainsi, le galet 4700 est en appui contre le rebord supérieur de la came 200 lors du mouvement de descente de la tige 2700 d'élongation dans le moule.

Avantageusement, afin de remettre la tige 2700 d'élongation dans sa position initiale avant l'opération d'étirage-soufflage, l'actionneur 3900 est apte à relever la tige 2700 d'élongation une fois que la tige 2700 a totalement étiré l'ébauche présente dans le moule et/ou que le galet 4700 n'est plus en appui sur la came 200 de contrôle de vitesse de descente de la tige 2700.

Alternativement, il est prévu des moyens de rappel sous la forme d'un ressort apte à relever le barreau élancé 4600 une fois que le galet 4700 n'est plus en appui contre la came 200.

De manière alternative, il est également possible de prévoir que le galet 4700 vienne en appui contre le rebord ou profil inférieur de la came 200 de contrôle de vitesse de descente de la tige 2700 d'élongation.

Dans ce cas de figure, l'actionneur 3900 est apte à exercer une force de poussée ascendante sur le barreau élancé 4600 de manière à ce que le galet 4700 vienne plaquer le profil inférieur de la came 200.

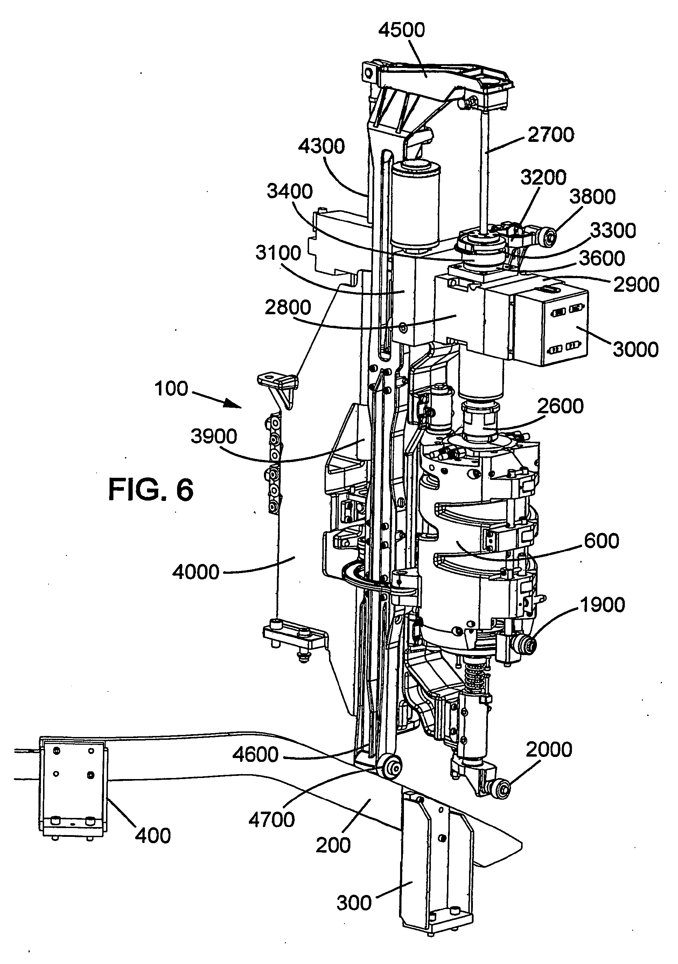

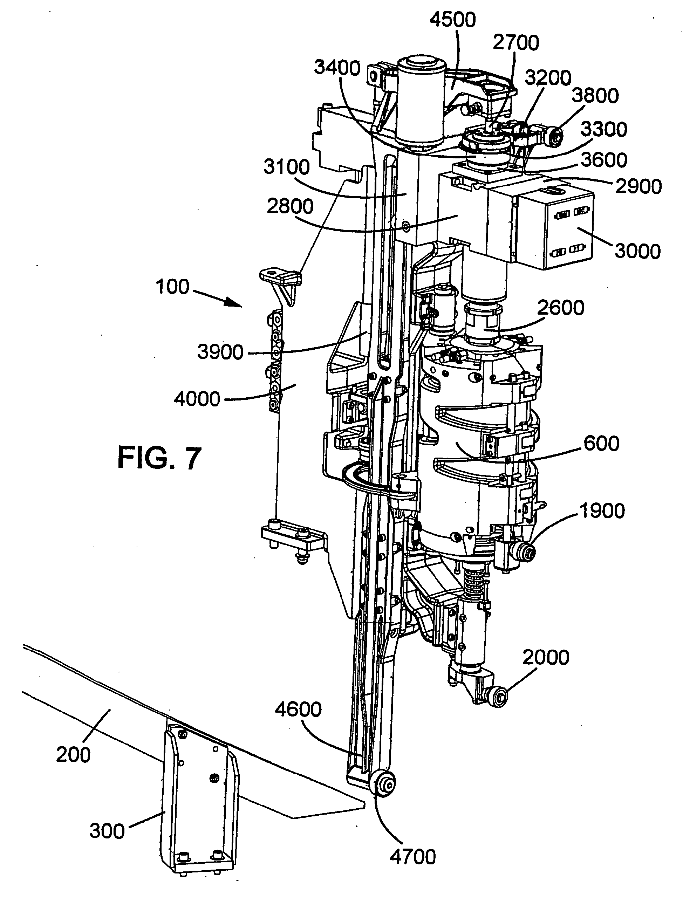

La figure 6 représente une vue en perspective du poste de soufflage dans une position intermédiaire, c'est-à-dire quand la tige 2700 d'élongation est partiellement étendue et n'atteint pas le fond du moule, comme cela est le cas dans la vue en perspective représentée à la figure 7.

De manière résumée, l'invention porte donc sur un poste d'étirage-soufflage de préformes avec leur extrémité ouverte vers le haut comprenant une console 4000 supportant un moule de soufflage, le poste 100 comprenant en outre une tige 2700 d'élongation et des moyens de commande des mouvements de la tige 2700 d'élongation, ces moyens de commande comprenant d'une part un actionneur 3900, et d'autre part un galet 4700 et une came 200 de régulation de vitesse, le galet 4700 venant en appui contre la came 200 de régulation de vitesse lors de l'entrée de la tige 2700 d'élongation dans le moule de soufflage, contrôlant ainsi la vitesse d'entrée de cette tige 2700 d'élongation dans le moule de soufflage, la came 200 de régulation de vitesse étant disposée en dessous du fond 800 du moule de soufflage.

L'invention présente de nombreux avantages.

La hauteur de machine d'étirage-soufflage peut être réduite, par rapport aux machines de même capacité, d'environ un mètre. La structure d'habillage et l'habillage sont réduits d'autant.

Le châssis supérieur de machine est allégé.

Le montage et démontage de la came 200 est simplifié car effectué en partie basse de machine.

Le graissage de la came 200 d'élongation est effectué en partie basse de machine, à l'opposé des buvants des récipients, et sous les moules, ce qui supprime les risques de pollution des moules. Cet avantage est tout particulièrement intéressant lorsque la machine de soufflage produit des flacons pour liquide alimentaire.

Il n'existe plus de support de tige d'élongation rapporté en hauteur sur une console porte-moule, contrairement aux montages conventionnels. La console 4000 supporte à la fois une unité porte-moule et les organes de commande de mouvement de la tige d'élongation.

L'invention vient d'être décrite dans le cas où le poste de soufflage est muni d'un moule ne comportant qu'une cavité. Elle pourra aussi être mise en oeuvre dans le cas d'un poste de soufflage à double cavité comportant deux tiges d'étirage.

## Revendications

1. Poste d'étirage-soufflage de préformes avec leur extrémité ouverte vers le haut comprenant une console (4000) supportant un moule de soufflage, le poste (100) comprenant en outre une tige (2700) d'élongation et des moyens de commande des mouvements de la tige (2700) d'élongation, ces moyens de commande comprenant d'une part un actionneur (3900), et d'autre part un galet (4700) et une came (200) de régulation de vitesse, ledit galet (4700) venant en appui contre ladite came (200) de régulation de vitesse lors de l'entrée de la tige (2700) d'élongation dans le moule de soufflage, contrôlant ainsi la vitesse d'entrée de cette tige (2700) d'élongation dans le moule de soufflage, **caractérisé en ce que** la came (200) de régulation de vitesse est disposée en dessous du fond (800) du moule de soufflage.

2. Poste d'étirage-soufflage selon la revendication 1, **caractérisé en ce que** l'actionneur (3900) est un vérin pneumatique ou hydraulique.

3. Poste d'étirage-soufflage selon la revendication 1 ou 2, **caractérisé en ce qu'**il comprend des moyens de montage amovible de la tige (2700) d'élongation aux moyens de commande des mouvements de cette tige (2700) d'élongation.

4. Poste d'étirage-soufflage selon la revendication précédente 3, **caractérisé en ce que** lesdits moyens de montage amovible comprennent un boîtier (4400) amovible dans lequel est fixée une extrémité de la tige (2700) d'élongation, l'autre extrémité de la tige (2700) d'élongation étant destinée à s'insérer dans une ébauche présente dans le moule.

5. Poste d'étirage-soufflage selon la revendication 4, **caractérisé en ce que** le galet (4700) est monté en partie extrême inférieure d'un barreau (4600) coulissant sensiblement verticalement, ce barreau (4600) étant solidaire, à sa partie extrême supérieure opposée, d'une barre (4500) sensiblement transversale reliant mécaniquement la tige (2700) d'élongation à la tige (4300) du vérin (3900).

6. Poste d'étirage-soufflage selon la revendication précédente 5, **caractérisé en ce que** le boîtier (4400) est fixé sur ladite barre (4500) transversale.

7. Poste d'étirage-soufflage selon l'une quelconque des revendications précédentes 5 ou 6, **caractérisé en ce que** l'extrémité supérieure de la tige (4300) du vérin (3900) est fixée à la barre (4500) transversale.

8. Poste d'étirage-soufflage selon l'une quelconque des revendications précédentes 1 à 7, **caractérisé en ce que** le galet (4700) est en appui contre le rebord supérieur de la came (200) lors de la descente de la tige (2700) d'élongation dans l'ébauche présente dans le moule.

9. Poste d'étirage-soufflage selon l'une quelconque des revendications précédentes 5 à 8, **caractérisé en ce que** le barreau (4600) élancé, la tige (2700) d'élongation et la tige (4300) du vérin (3900) sont parallèles entre eux.

10. Poste d'étirage-soufflage selon l'une quelconque des revendications précédentes 5 à 9, **caractérisé en ce que** l'actionneur (3900) est commandé de manière telle que le barreau (4600) élancé exerce une force de poussée verticale descendante sur la came (200) lors du roulement du galet (4700) sur la came (200).

11. poste d'étirage-soufflage selon l'une quelconque des revendications précédentes 1 à 10, **caractérisé en ce que** l'actionneur (3900) est apte à relever la tige (2700) d'élongation une fois que la tige (2700) a totalement étiré l'ébauche présente dans le moule et/ou que le galet (4700) n'est plus en appui sur la came (200) de contrôle de vitesse de descente de la tige (2700).

12. Machine d'étirage-soufflage du type carrousel comprenant :
- un châssis tournant rotatif autour d'un axe de rotation ;
- plusieurs postes d'étirage-soufflage, supportés par le châssis tournant ;
- une colonne tournante d'alimentation fluidique, co-axiale à l'axe de rotation du châssis tournant ;
- au moins un raccord fluidique tournant, prévu sur ladite colonne et connecté à des sources fixes de fluides,
**caractérisée en ce qu'**elle comprend au moins un poste d'étirage-soufflage tel que présenté dans l'une quelconque des revendications précédentes.

## Claims

1. A station for the stretch-blow molding of preforms with their open end uppermost, comprising a console (4000) supporting a blowing mold; the station (100) also comprising a stretch rod (2700) and control means for controlling the movements of the stretch rod (2700), these control means comprising on the one hand an actuator (3900), and on the other hand a roller (4700) and a speed control cam (200), said roller (4700) pressing against said speed control cam (200) as the stretch rod (2700) enters the blowing mold, thus controlling the speed of entry of this stretch rod (2700) into the blowing mold; which station is **characterized in that** the speed control cam (200) is located underneath the base (800) of the blowing mold.

2. The stretch-blow molding station as claimed in claim 1, **characterized in that** the actuator (3900) is a pneumatic or hydraulic thrust cylinder.

3. The stretch-blow molding station as claimed in claim 1 or 2, **characterized in that** it comprises means for the removable assembly of the stretch rod (2700) to the control means for controlling the movements of this stretch rod (2700).

4. The stretch-blow molding station as claimed in the preceding claim 3, **characterized in that** said removable assembly means comprise a removable casing (4400) in which one end of the stretch rod (2700) is fixed, the other end of the stretch rod (2700) being intended to be inserted into a parison present inside the mold.

5. The stretch-blow molding station as claimed in claim 4, **characterized in that** the roller (4700) is mounted at the very bottom of a substantially vertically sliding pole (4600), this pole (4600) being connected, at its opposite or top end, to a substantially transverse bar (4500) mechanically connecting the stretch rod (2700) to the rod (4300) of the thrust cylinder (3900).

6. The stretch-blow molding station as claimed in the preceding claim 5, **characterized in that** the casing (4400) is fixed to said transverse bar (4500).

7. The stretch-blow molding station as claimed in either of the preceding claims 5 and 6, **characterized in that** the upper end of the rod (4300) of the thrust cylinder (3900) is fixed to the transverse bar (4500).

8. The stretch-blow molding station as claimed in any one of the preceding claims 1 to 7, **characterized in that** the roller (4700) presses against the top edge of the cam (200) as the stretch rod (2700) descends into the parison present inside the mold.

9. The stretch-blow molding station as claimed in any one of the preceding claims 5 to 8, **characterized in that** the thin pole (4600), the stretch rod (2700) and the rod (4300) of the thrust cylinder (3900) are mutually parallel.

10. The stretch-blow molding station as claimed in any one of the preceding claims 5 to 9, **characterized in that** the actuator (3900) is controlled in such a way that the thin pole (4600) exerts a vertical downward force on the cam (200) when the roller (4700) is rolling along the cam (200).

11. The stretch-blow molding station as claimed in any one of the preceding claims 1 to 10, **characterized in that** the actuator (3900) is able to raise the stretch rod (2700) once the rod (2700) has finished stretching the parison present inside the mold and/or once the roller (4700) is no longer pressing on the cam (200) which controls the speed of descent of the rod (2700).

12. A carousel-type stretch-blow molding machine comprising:
- a revolving frame rotating about an axis of rotation;
- several stretch-blow molding stations supported by the revolving frame;
- a revolving fluid-supply column coaxial with the axis of rotation of the revolving frame; and
- at least one revolving fluid connector located on said column and connected to fixed sources of fluids,
said machine being **characterized in that** it comprises at least one stretch-blow molding station as set out in any one of the preceding claims.

## Patentansprüche

1. Station zum Streckblasen von Rohlingen mit nach oben offenen Enden, umfassend eine Konsole (4000), die eine Blasform trägt, wobei die Station (100) u.a. einen Dehnungsstift (2700) und Mittel zur Steuerung der Bewegungen des Dehnungsstifts (2700) umfasst, diese Steuerungsmittel einerseits einen Aktuator (3900) und andererseits eine Rolle (4700) und einen Geschwindigkeiteregelungsnocken (200) umfassen, die Rolle (4700) beim Eintritt des Dehnungsstifts (2700) in die Blasform zum Aufliegen auf dem Geschwindigkeitsregelungsnocken (200) kommt, wodurch die Eintrittsgeschwindigkeit dieses Dehnungsstifts (2700) in die Blasform kontrolliert wird, **dadurch gekennzeichnet, dass** der Geschwindigkeitsregelungsnocken (200) unter dem Boden (800) der Blasform angeordnet ist.

2. Streckblasstation nach Anspruch 1, **dadurch gekennzeichnet**, das der Aktuator (3900) ein Pneumatik- oder Hydraulikzylinder ist.

3. Streckblasstation nach Anspruch 1 oder 2, **dadurch gekennzeichnet, dass** sie Mittel zur abnehmbaren Montage des Dehnungsstifts (2700) an den Mitteln zur Steuerung der Bewegungen dieses Dehnungsstifts (2700) umfasst.

4. Streckblasstation nach dem vorhergehenden Anspruch 3, **dadurch gekennzeichnet, dass** die Mittel zur abnehmbaren Montage ein abnehmbares Gehäuse (4400) umfassen, in dem ein Ende des Dehnungsstifts (2700) befestigt ist, wobei das andere Ende des Dehnungsstifts (2700) dazu bestimmt ist, in einen Vorformling, der sich in der Form befindet, einzufahren.

5. Streckblasstation nach Anspruch 4, **dadurch gekennzeichnet, dass** die Rolle (4700) am untersten Teil einer Stange (4600) montiert ist, die im Wesentlichen vertikal gleitet, wobei diese Stange (4600) an ihrem entgegengesetzten obersten Teil fest mit einer Strebe (4500) verbunden ist, die im Wesentlichen quer liegt und den Dehnungsstift (2700) mechanisch mit der Stange (4300) der Zylinders (3900) verbindet.

6. Streckblasstation nach dem vorhergehenden Anspruch 5, **dadurch gekennzeichnet, dass** das Gehäuse (4400) an der genannten Querstrebe (4500) befestigt ist.

7. Streckblasstation nach einem der vorhergehenden Ansprüche 5 oder 6, **dadurch gekennzeichnet, dass** das obere Ende der Stange (4300) des Zylinders (3900) an der Querstrebe (4500) befestigt ist.

8. Streckblasstation nach einem der vorhergehenden Ansprüche 1 bis 7, **dadurch gekennzeichnet, dass** die Rolle (4700) beim Herunterfahren des Dehnungsstifts (2700) in den Vorformling, der sich in der Form befindet, auf der oberen Kante des Nocken (200) aufliegt.

9. Streckblasstation nach einem der vorhergehenden Ansprüche 5 bis 8, **dadurch gekennzeichnet, dass** die schlanke Stange (4600), der Dehnungsstift (2700) und die Stange (4300) des Zylinders (3900) zueinander parallel sind.

10. Streckblasstation nach einem der vorhergehenden Anspruche 5 bis 9, **dadurch gekennzeichnet, dass** der Aktuator (3900) derart gesteuert wird, dass die schlanke Stange (4600) beim Rollen der Rolle (4700) auf dem Nocken (200) eine vertikale, nach unten gerichtete Schubkraft auf den Nocken (200) ausübt.

11. Streckblasstation nach einem der vorhergehenden Anspruche 1 bis 10, **dadurch gekennzeichnet, dass** der Aktuator (3900) den Dehnungsstift (2700) einziehen kann, wenn der Stift (2700) den Vorformling, der sich in der Form befindet, vollständig gereckt hat und/oder wenn die Rolle (4700) nicht mehr auf dem Nocken (200) zur Regelung der Geschwindigkeit des Herunterfahrens des Stifts (2700) aufliegt.

12. Karussellstreckblasmaschine, umfassend:
- ein Drehgestell, das um eine Drehachse drehbar ist;
- mehrere Streckblasstationen, die von dem Drehgestell getragen sind;
- eine zur Drehachse des Drehgestelle koaxiale Drehsäule zur Fluidzufuhr;
- mindestens eine Fluiddrehverbindung, die an der Säule vorgesehen ist und mit festen Fluidquelle verbunden ist,
**dadurch gekennzeichnet, dass** sie mindestens eine wie in einem der vorhergehenden Ansprüche wiedergegebene Streckblasstation umfasst.
